# EUROPEAN PATENT APPLICATION

(11) **EP 1 047 004 A2**
(43) Date of publication of application: **25.10.2000**
(21) Application number: 00107194.3
(22) Date of filing: 12.04.2000
(51) Int. Cl.: G06F 17/30

(54) **System and method for scanning & storing universal resource locator codes**

(30) Priority: 19.04.1999 US 293910
(71) Applicant: AT&T Corp., New York, NY 10013-2412 (US)
(72) Inventor: Bansal, Pradeep K., Dayton, New Jersey 08810 (US)
(74) Representative: Modiano, Guido, Dr.-Ing.

(57) **Abstract**

A universal resource locator (URL) code scanning and storing device and method for scanning a code to generate a URL, storing the URL, and later uploading URLs from a list of selected previously stored URLs to an Internet access device. The URL scanning and storing device may also store additional textual and audio comments corresponding to stored URLs. Once the URL is uploaded to the Internet access device, the Internet access device may then use the URL to access information, such as a web-site relating to the URL, via the Internet.

## Description

### BACKGROUND OF THE INVENTION

### 1. Field of Invention

The present invention relates to a method and system for acquiring and storing Internet uniform resource locator (URL) codes and subsequently uploading the URL codes to an Internet access device terminal.

### 2. Description of Related Art

With the rapid expansion of Internet capabilities and Internet users, the number of new web-sites is rapidly expanding. Each web-site has its own unique Uniform Resource Locator (URL) code. URLs are increasingly being used in advertising in newspapers, magazines, on cereal boxes, on the backs of trucks, and the like. People viewing these URLs may want to visit the advertised web-sites; however, they may not be able to write down or remember the URLs long enough to enter them into an Internet access device. Therefore, there is a need for new technology to allow users to recall URLs for use in accessing web-sites.

### SUMMARY OF THE INVENTION

The present invention provides a URL storage device. The URL storage device includes a scanner for scanning a code to generate a URL, a memory for storing a plurality of URLs, and a transmitter for uploading selected URLs to an Internet access device, whereupon the Internet access device uses the URL to retrieve information. The URLs may be selected from a list of previously stored URLs from a memory by a user.

Additionally, the URLs may be stored with additional information to later aid in identifying and retrieving a particular URL. The additional information may be in either a textual or audio format and may be inputted by a user through an alpha-numeric keypad or microphone, respectfully.

### BRIEF DESCRIPTION OF THE DRAWINGS

The invention will be described with reference to the accompanying drawings, in which like elements are referred to with like numbers, and in which:
Fig. 1 shows an exemplary embodiment of a system according to the present invention;
Fig. 2 shows an exemplary block diagram of a URL storage device;
Fig. 3 is an exemplary data structure for storing URLs and related information;
Fig. 4 is an exemplary flowchart outlining one method for scanning and storing URLs according to the present invention; and
Fig. 5 is an exemplary flowchart outlining one method for uploading URLs according to the present invention.

### DETAILED DESCRIPTION OF PREFERRED EMBODIMENTS

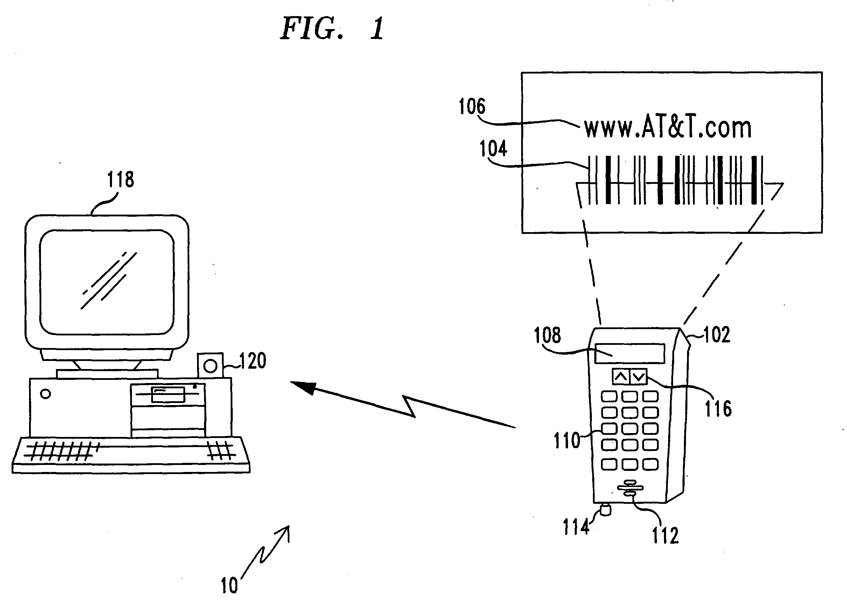

Fig. 1 shows an exemplary embodiment of a system 10 according to the present invention. The system 10 includes a URL storage device 100 having a scanning element 102 for scanning a code 104 which represents a URL 106, for example, "www.AT&T.com." The scanned code 104 is used to generate an electronic version of the URL which is stored within the URL storage device 100. The stored URLs may be uploaded to the Internet access device 118 for use in accessing web-sites associated with the stored URLs.

The URL storage device 100 further may include a display 108, a keypad 110, scroll keys 116, an audio input/output device 112, and a transmitter 114. The display 108 can be used to display URLs 104 to a user of the storage device 100. Additionally, the display 108 can be used in conjunction with keypad 110 and scroll keys 116 to display and scroll through previously stored URLs, enter textual messages corresponding to the URLs, and the like. The display may be a liquid crystal display (LCD), light emitting diode (LED) display, or the like. In addition, the keypad 110 and the display 108 can be combined into a touch sensitive display or the like.

The keypad 110 can be an alpha-numeric keypad, or the like. The storage device 100 may also include scroll keys 116 to perform scrolling functions on the stored URLs displayed on display 108. Additionally, as described in greater detail below, the keypad 110 can be used to enter and store textual comments corresponding to each URL.

The audio input/output device 112 can include a speaker/microphone for playing and recording audio messages to and from the user. As described in greater detail below, the URL storage device 100 can store audio messages corresponding to the stored URLs. The audio messages can later be played back through the audio input/output device 112 if the user chooses to listen to additional information about a stored URL.

The URL storage device 100 uses the transmitter 114 to upload stored URLs to the Internet access device 118 through a corresponding receiver 120. The transmission can occur in a variety of ways, such as via a cable, infrared (IR) signal, radio frequency (RF) signal, or the like. Once the uploaded URLs are received by the Internet access device 118 via the receiver 120, they may be stored by a software application running on the Internet access device 118. The URL may then be used to retrieve information from web-sites corresponding to the uploaded and stored URLs.

As described in greater detail below, the URL storage device 100 can selectively upload URLs to the Internet access device 118 based on a user's selection. A user may select previously stored URL by scrolling through the list of URLs and "flagging" the URLs which are to be transmitted. The "flagging" of the URLs may be accomplished using the keypad 110 to input flag commands for the displayed URLs. Alternatively, the URLs may be uploaded according to the date on which they were acquired or a grouping in which the URL has been placed by the user.

Internet access device 118 may include any device that is used to gain access to the Internet. For example, Internet access device 118 may include computers, personal digital assistants, smart or computer assisted televisions, or the like.

In operation, the URL storage device 100 activates, in response to a user command, the scanner 102 to scan a code 104 representing a URL. The URL storage device may receive the user command through the depression of a scanning activation button. Alternatively, the URL storage device 100 may activate the scanner 102 by using a proximity sensor which activates the scanner 102 when the URL storage device 100 is adjacent to a URL code.

As shown in Fig. 1, scanner 102 may be a barcode scanner, an optical scanner, or the like. When an optical scanner is used, optical character recognition (OCR) algorithms may be used to obtain URLs from the scanner data. When a barcode reader is used, the dimensions of each bar or combination of bars in the barcode may be designated as corresponding to characters, words, symbols, and the like. The correspondence between bars and the characters, words, symbols etc. may be stored in a lookup table in a memory of the URL storage device 100.

Alternatively, the URL may be directly input through the audio input/output device 112 by using speech recognition to convert a spoken URL into a textual format. This may be accomplished by the user speaking the URL into input/output device 112 whereupon a voice recognition system translates a spoken URL into a textual format. The textual URL may then be saved in a manner similar to a URL which has been scanned in, as described above.

Once a URL has been acquired, either by scanning a barcode or through optical character recognition, the URL storage device 100 stores the URL in memory and displays the URL on display 108. The URL storage device 100 instructs the display 108 to display a message to the user asking the user whether they wish to store or discard the URL. The URL storage device 100 then waits for the user to determine whether the user wishes to keep or discard the URL in memory. This may be accomplished by visually displaying the query on display 108 or audibly playing the query through the audio input/output device 112. A user's response maybe input manually by keypad 110 or through voice recognition via the audio input/output device 112.

If the user decides to store the URL, it is then stored in the memory. The URL storage device 100 may then prompt the user to input further information regarding the URL. For example, in reply to the prompt the user may enter a text message via keypad 110. Alternatively, a sound recording may be entered through audio input/output device 112 and stored in the memory as a .WAV file, for example. Later, the URL storage device 100 may retrieve the URL and display or play the URL and its corresponding additional information.

When a user wants to upload any of the stored URLs to an Internet access device 118, the URL storage device 118 retrieves the requested URLs from the memory and uploads them through transmitter 114 to the Internet access device 118. The URL storage device 100 can upload URLs to the Internet access device 118 by any of a variety of methods. For example, a user could connect transmitter 114 of URL storage device 100 to the receiver 120 of Internet access device 118 by a cable. Alternatively, transmitter 114 could propagate an IR signal, whereupon the URL is transmitted while the user aims the transmitter 114 at the receiver 120. Additionally, the storage device 100 may be "plugged into" the Internet access device 118 directly. Any other manner of uploading data from the storage device 100 to the Internet access device 118 may be used without departing from the spirit and scope of the present invention.

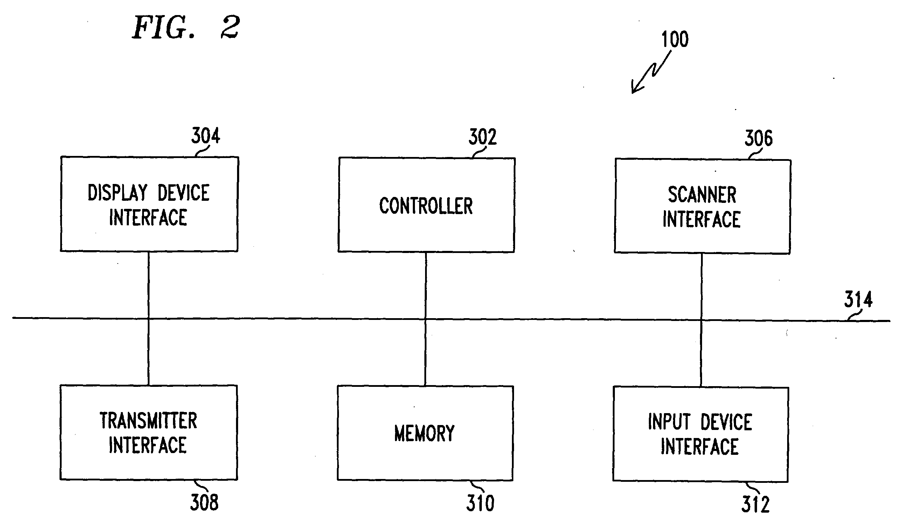

Fig. 2 is an exemplary block diagram of the URL storage device 100. The URL storage device 100 may include a controller 302, a display device interface 304, a scanner interface 306, a transmitter interface 308, a memory 310, and an input device interface 312. The above components may be coupled together via control/data bus 314. The above architecture is exemplary only. Other architectures of the components may be used without departing from the spirit and scope of the present invention.

The scanner interface 306 is coupled with a scanner 102 and receives a signal corresponding to a URL code. When a URL code signal is received by the controller 302 via the scanner interface 306, the controller 302 generates a URL which corresponds to the code. The URL may be generated directly from the code using optical character recognition or the code may be used to look up corresponding URLs in a table stored in memory 310, as described above.

Once a URL has been acquired, the controller 302 may display the URL via display device interface 304 on the display 108. By doing so, the controller 302 allows the user to confirm that the correct URL has been captured. The controller 302 may present the user with the option of adding the URL to memory or discarding the URL. The user may then enter a response to the controller 302 through keypad 110.

If the user decides to add the new URL, the controller 302 will allow the user to enter additional information about the URL to aid the storing, classifying, retrieving, identifying, or transmitting of the URL. As described in greater detail below, additional textual information can be entered by the user through an alpha-numeric keypad 110 via input device interface 312. Also, audio information may be entered through the microphone 112 via input device interface 312.

If the user decides to store the URL and any corresponding additional information that has been inputted, the controller 302 stores the URL and corresponding information in memory 310. The URL and corresponding information are stored in a data structure for retrieval and uploading at a later time.

The above process can be repeated numerous times until the memory 310 becomes full. The user may use keypad 110 to edit and/or delete the URLs and corresponding data. URLs may be grouped together according to a user's preference, such as grouping all the URLs related to gardening in the same group for ease of retrieval at a later date.

Additionally, the controller 302 can edit the URL data to add/delete textual or audio comments related to the URL. This may be accomplished by having the user scroll through a listing of the stored URLs and selecting the URLs for deletion.

When a user decides to upload one or more URLs in memory 310 to an Internet access device 118, the controller 302 retrieves selected ones of the stored URLs from the memory 310 and sends them to the transmitter 114 via the transmitter interface 308 which transmits/uploads the URL to the Internet access device 118. Additionally, the corresponding URL information (i.e., grouping, audio/textual comments, date and the like) may be uploaded. Once the Internet access device 118 receives the URLs, the Internet access device 118 may then access information relating to the URL, such as a web-site, using software resident on the Internet access device 118, such as an Internet browser.

The URL storage device 100 may also be used in a manner similar to a television remote control. For example, a user may be able to assign individual previously stored URLs to individual buttons in the key pad 110. Later, the user can independently transmit the various URLs to an Internet access device 118 by depressing the corresponding button, whereupon a software application running on the Internet access device 118 will immediately retrieve the information, such as web-page, related to the URL.

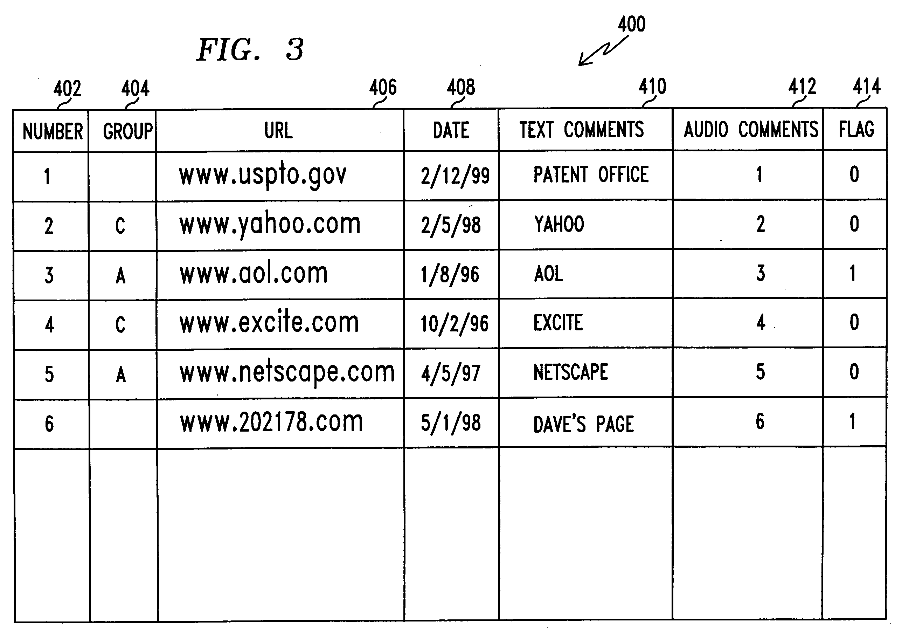

Fig. 3 shows an exemplary data structure 400 for storing URLs and related information in memory 310. Field 406 is the stored URL. For example, the first URL stored in field 406 is "www.uspto.gov".

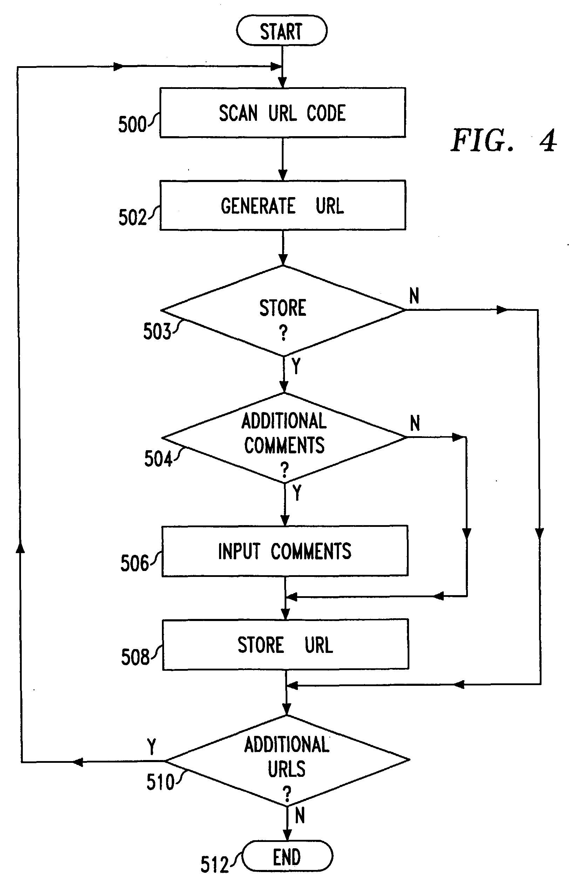

Field 402 is the order field for the URLs. As shown in Fig. 4, all of the stored URLs are stored from 1 to 6. The order field 402 can be identical to the order in which the URLs are stored. Alternatively, the order may be based on user ranking of stored URLs, for example, order of importance to the user.

Field 404 contains the grouping codes of the stored URLs. As mentioned above, the individual URLs can be grouped into sets of URLs by giving each URL in a set a common group identifier. For example, as shown in fields 404 and 406 the URL "www.yahoo.com" and "www.excite.com" are both given the common group identifier "C". In this example, a user has grouped the URLs together because they are both related to Internet search engines. Additionally, the user may group URLs together based on the date the URL was acquired and any other user preference. The group designations in Fig. 3 are only exemplary and any other type of group designation may be used without departing from the spirit and scope of the present invention.

Field 408 contains the date that the URL was acquired and stored. The date field 408 can be used to group URLs as discussed above, can be used to select and transmit all URLs stored after a particular date and may be used when deleting URLs from the memory 310. For example, all files acquired before a particular date may be deleted to free space in the memory 310.

Fields 410 and 412 both contain comments added by the user to further identify the URL. As described above, the user can enter textual comments via keypad 110 and store them with a corresponding URL in field 410. For example, the URL "www.uspto.gov" has the textual comments "Patent Office". This field is particularly useful if a URL is not descriptive, such as the URL "www.202178.com". Here, as shown in field 410, the textual comments show the user that the URL is "Dave's Page".

Audio comments in field 412 can serve the same purpose as the textual comments of field 410. Field 412 includes a code which corresponds to an audio data file, such as a .WAV file, stored in correspondence with a particular URL. The audio files may be obtained and stored in any known manner, such as by using a voice digitizer (not shown) or the like.

Field 414 is provided to aid in selecting URLs from data structure 400 for transmission to Internet access device 118 via transmitter 114. As shown, field 414 may be set to either the number 0 or the number 1 to indicate whether the corresponding URL is to be uploaded. A flag value of 1 indicates that the URL is to be uploaded, and a flag value of 0 indicates that the URL is not to be uploaded.

When a user enters a command instructing the controller 302 that he wishes to upload URLs, the controller 302 will query the user to determine which URLs are to be uploaded. The controller 302 may display on display 108 each URL, with corresponding textual comments, play corresponding audio comments, and request that the user input a response through keypad 110 to indicate whether the displayed URL is to be uploaded. If the response is affirmative, then the default 0 in field 414 is replaced by a 1, thereby indicating that the URL is to be uploaded. For example, in field 414 the flags corresponding to "www.aol.com" and "www.202178.com" have been set to 1, thereby indicating that they will be uploaded.

Subsequently, when the user is ready to upload the URLs and once the URL storage device 100 is in proper engagement with internet access device 118, the controller 302 will search field 414 and upload any of the URLs having a flag set to 1.

Fig. 4 shows an exemplary flowchart outlining one method of scanning and storing URLs according to the invention. As shown in Fig. 4, in step 500, the controller 302 causes the scanner 102 to scan a URL code 104. Next, in step 502 the controller generates a URL from the scanned URL code and goes to step 503. The URL may be obtained through a look-up table or using optical character recognition, for example.

In step 503, the controller 302 displays a message on display 108 asking the user if he wishes to store the URL. If the user wishes to store the URL in memory 310, the controller 302 continues to step 504; otherwise, the controller 302 goes to step 510.

In step 504, the controller queries the user whether the user wishes to store any additional textual or audio comments with the URL. The user may respond via keypad 110. If the user wishes to store additional information, the controller 302 continues to step 506; otherwise, the controller goes to step 510 and stores the URL in memory 310.

In step 506 the controller prompts the user to input additional information corresponding to the URL in either a textual or audio format. The user may enter textual comments through alpha-numeric keypad 110 and audio comments through audio input/output device 114. Furthermore, in step 506 the user may input information regarding the grouping of the URL with other previously stored URLs.

Once the comments are complete, the controller 302 goes to step 508 and stores the corresponding additional information in memory 310 in accordance with data structure 400. The controller 302 proceeds to step 510 where, if the user wishes to continue scanning and storing URLs, the controller 302 returns to step 500 to repeat the above process. Otherwise, the controller 302 goes to step 512 where the scanning and storing process is terminated.

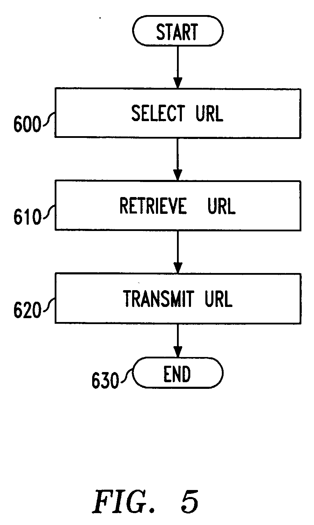

Fig. 5 shows an exemplary flowchart outlining one method of uploading URLs according to the invention. As shown in Fig. 5, in step 600, the controller 302 prompts a user to select a URL or set of URLs from the URLs stored in memory 310. As described above, this can be accomplished by controller 302 displaying on display 108 the stored URLs in order for a user to respond and set a flag in field 414 of Table 400 indicating that a particular URL is to be uploaded.

Next, in step 610 controller 302 accesses memory 310 to retrieve a URL corresponding to the flagged URLs. In addition, any or all of the information in fields 304 through 314 may also be retrieved for uploading to the Internet access device 118.

Once the URLs and corresponding information have been retrieved, in step 620 the controller 302 transmits the data corresponding to the URLs to the Internet access device 118 where it will be received by software residing on the Internet access device 118. After the transmission is complete, the controller 302 will proceed to step 630, whereupon the uploading process is terminated.

In an example of an embodiment of this invention, consider a user, who is reading a magazine. While flipping through the pages, this individual comes across an advertisement for a particular automobile that he is currently in the market to buy. Contained within the advertisement, he notices a URL code. Since he is unlikely to remember the rather lengthy URL code until a time when he has access to an Internet access device 118, he aligns a scanner 102 of his URL storage device 100 with the URL code and scans the URL. The URL storage device 100 then displays the URL code on display 108 and asks the user whether or not he wants to save or discard the URL. The user may then decide to save the URL by depressing an appropriate key on the keypad 110.

Next, the URL storage device 100 asks the user whether he wishes to store any additional comments with the URL he has just acquired. The user decides that he wants to store audio comments which will later remind him why he has stored the URL. While depressing a record key, the user speaks the word "car advertisement" into the microphone 112.

At a later time when the user has access to an Internet access device 118, he decides that he would now like to visit the car advertisement web-site. Steve uses his URL storage device 100 to scroll through a list of previously stored URLs; however, he cannot determine or remember which URL is the correct one. Therefore, he plays the audio messages through speaker 112 for each URL until he hears the phrase "car advertisement", which identifies the URL as the one which he is searching for.

Upon determining which URL to upload, the user then flags the URL for uploading by displaying the URL and pressing an appropriate key in the keypad 110. The user then points the infrared transmitter 114 of the URL storage device 100 at his Internet access device 118 and initiates a transmission by depressing a transmission button. The Internet access device 118 receives the transmission through receiver 120 and, via software applications running thereon, recognizes the URL transmission and subsequently retrieves information contained at the web-site corresponding to the URL. In this manner, the user is able to store URLs in the URL storage device 100 for later use when accessing the Internet.

As shown in Fig. 2, the method of this invention is preferably implemented on a programmed processor. However, the URL storage device 100 can also be implemented on a general purpose or special purpose computer, a programmed microprocessor or microcontroller and peripheral integrated circuit elements, an Application Specific Integrated Circuit (ASIC) or other integrated circuit, a hardware electronic or logic circuit such as a discrete element circuit, a programmable logic device such as a PLD, PLA, FPGA or PAL, or the like. In general, any device on which a finite state machine capable of implementing the flowchart shown in Figs. 4 and 5 can be used to implement the URL storage device 100 functions of this invention.

While this invention has been described in conjunction with the specific embodiments thereof, it is evident that many alternatives, modifications and variations will be apparent to those skilled in the art. Accordingly, preferred embodiments of the invention as set forth herein are intended to be illustrative not limiting. There are changes tat may be made without departing from the spirit and scope of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method for storing and transmitting one or more URLs, comprising the steps of:
entering a code to generate a URL;
storing the URL in a list of URLs;
receiving a selection of at least one selected URL from said list of URLs; and
transmitting said at least one selected URL to a terminal.

2. The method according to claim 1, wherein said step of entering the code to generate a URL further includes scanning a code.

3. The method according to claim 1, wherein said step of entering a code to generate the URL further includes:
verbally entering an audio code; and
generating a URL based on said audio code using speech recognition.

4. The method according to claims 1 to 3 further comprising the step of:
using said at least one selected URL to access a data network.

5. The method according to claims 1 to 4, wherein said step of storing a URL further includes storing additional information and wherein said additional information includes at least one of textual information and audio information.

6. The method according to claims 1 to 4, further comprising the steps of: grouping one or more URLs in said list of URLs into groups of URLs; and assigning a group identifier to each of said groups of URLs.

7. The method according to claim 2, wherein said step of scanning a code to generate a URL further comprises:
scanning a barcode to obtain barcode values; and
generating a URL based on said barcode values and information stored in a look-up table.

8. The method according to claim 2, wherein said step of scanning a code to generate a URL further comprises:
scanning a textual code; and
generating a URL based on said textual code using optical character recognition.

9. The method according to claims 1 to 4, further comprising the step of organizing said list of URLs based on a priority assigned to each URL in said list of URLs.

10. The method according to claim 6, wherein said step of receiving a selection of at least one selected URL includes receiving a selection of a group identifier and selecting each of the URLs in the selected group corresponding to said group identifier.

11. The method according to claims 1 to 4, wherein said step of receiving a selection of at least one selected URL includes receiving a selection of a date range and selecting each of the URLs in said list of URLs having a date within said range.

12. The method according to claims 1 to 4, wherein said step of receiving a selection further comprises setting an upload flag associated with said at least one URL based on said selection, and said step of transmitting includes uploading said at least one selected URL based on whether said upload flag for said at least one selected URL is set for upload.

13. An apparatus for storing and transmitting one or more URLs, the apparatus comprising:
a scanner for scanning a code to generate a URL;
a memory for storing said URL in a list of URLs;
a controller connected with said scanner and memory for receiving a selection of at least one selected URL from said list of URLs; and
a transmitter coupled with said controller for transmitting said at least one selected URL to a terminal.

14. The apparatus according to claim 13, wherein said transmitter transmits said URL to a terminal via one of cable, infrared, and radio frequency communication links.

15. The apparatus according to claim 13, wherein said controller stores the URL in memory with additional information and wherein said additional information includes at least one of textual information and audio information.

16. The apparatus according to claim 13, wherein said controller groups one or more URLs in said list of URLs into groups of URLs stored in memory and assigns a group identifier to each of said groups of URLs.

17. The apparatus according to claim 13, wherein said scanner scans a barcode to obtain barcode values, and said controller generates a URL based on said barcode values and information stored in memory as a look-up table.

18. The apparatus according to claim 13, wherein said scanner scans a textual code, and said controller generates a URL based on said textual code using optical character recognition.

19. The apparatus according to claim 13, wherein said controller organizes the list of URLs within memory based on a priority assigned to each URL in said list of URLs.

20. The apparatus according to claim 16, wherein said controller receives a selection of at least one selected URL by receiving a selection of a group identifier and selecting each of the URLS in the selected group corresponding to said group identifier.

21. The apparatus according to claim 13, wherein said controller receives a selection of at least one selected URL by receiving a selection of a date range and selecting each of the URLs in said list of URLs having a date within said range.

22. The apparatus according to claim 13, wherein said controller receives a selection and sets an upload flag associated with the at least one URL based on said selection and uploads said at least one selected URL via transmitter based on whether said upload flag for the at least one selected URL is set for upload.
